# EUROPÄISCHE PATENTSCHRIFT

(11) **EP 1 000 647 B1**
(45) Veröffentlichungstag und Bekanntmachung des Hinweises auf die Patenterteilung: **28.06.2006**
(21) Anmeldenummer: 98121328.3
(22) Anmeldetag: 10.11.1998
(51) Int. Cl.: B01D 29/11, B01D 35/16, B01D 29/90

(54) **Kerzenfilter für die Anschwemmfiltration von Getränken**
Candle filter for the pre-coat filtration of beverages
Filtre à bougie pour la filtration à précouche de boissons

(43) Veröffentlichungstag der Anmeldung: 17.05.2000
(73) Patentinhaber: Filtrox AG, 9000 St. Gallen (CH)
(72) Erfinder: Baumann Erwin, 9536 Schwarzenbach (CH); Meier, Ernst, 9212 Arnegg (CH)
(74) Vertreter: Hepp, Dieter

(56) Entgegenhaltungen:
- EP-A- 0 280 063
- WO-A-96/14127
- CH-A- 688 265
- DE-A- 19 518 575
- DE-B- 1 097 409
- FR-A- 2 251 349
- US-A- 4 704 210

## Beschreibung

Die Erfindung betrifft einen Kerzenfilter für die Anschwemmfiltration von Getränken und flüssigen Lebensmitteln sowie ein Verfahren zur Filtration und ein Verfahren zur Entfernung von Trub.

Kerzenfilter mit zylinderförmigen, hängend angeordneten Filterelementen sind seit langem bekannt und werden zusammen mit Filterhilfsmitteln in der Anschwemmfiltration von Getränken verwendet.

Bei der Anschwemmfiltration in Kerzenfiltern werden in der zu filtrierenden Flüssigkeit suspendierte Filterhilfsmittel und/oder Stabilisierungsmittel in einem Unfiltratraum an Filterelemente, sogenannten Filterkerzen, unter Flüssigkeitsdruck angeschwemmt. Dabei wird eine Filterschicht aufgebaut. Der Aufbau der Filterschicht wird durch die gewollte Rückhaltung der Filterhilfsmittel und/oder Stabilisierungsmittel auf der nur für die Flüssigkeit durchlässigen Oberfläche der Filterelemente hervorgerufen. Als Filterhilfsmittel werden beispielsweise natürliche Diatomeenerde, Kieselgur, Perlite, Zellulose, Kohle oder Stärke verwendet.

Solche Kerzenfilter sind beispielsweise in EP-B-203 206, in DE-A-2 847 947 oder in CH-A-481 669 beschrieben.

Um eine möglichst gute Verteilung der zu filtrierenden Flüssigkeit (Unfiltrat) im Unfiltratraum zu erreichen, ist es bekannt, sogenannte Einlaufverteiler zu verwenden. Solche Einlaufverteiler sorgen für Turbulenzen in der Flüssigkeit im Unfiltratraum und damit für eine optimale Verwirbelung und Verteilung der Filterhilfsmittel.

Der Grad der Verwirbelung (d.h. die Geschwindigkeit der Strömung) kann nicht beliebig gewählt werden. Zu grosse Geschwindigkeit stört den Aufbau des Filterkuchens, zu kleine Geschwindigkeit begünstigt die Sedimentation. Es gilt also, einen Kompromiss zu finden.

Die bekannten Kerzenfilter für die Anschwemmfiltration weisen ein konusartiges unteres Ende und einen etwa zylindrischen Mittelteil auf, die den Unfiltratraum definieren. Im Unfiltratraum hängend angeordnete Filterkerzen erstrecken sich nur über einen Teil dieses zylindrischen Teils. Der Grund dafür ist, dass das Volumen des Trubes, der sich an den Filterelementen anlagert, nicht beliebig gross werden darf. Nach Beendigung der Filtration wird der an den Filterkerzen abgelagerte Trub zuerst in dem konusförmigen Teil gesammelt und dann ausgetragen. Weil vermieden werden muss, dass die unteren Enden der Filterkerzen im angesammelten Trub liegen, müssen die Kerzen ausreichend kurz bzw. der Konusteil ausreichend gross dimensioniert werden.

Dies führt aber dazu, dass die Aussenmasse von solchen Kerzenfiltern im Vergleich zum für die Filtration verwendbaren Volumen verhältnismässig gross sind.

Bei Filterkesseln, die nicht der Anschwemmfiltration dienen oder bei Siebfiltern ist es bekannt, den Kessel mit einem Deckel und mit einem Boden in der Form eines Klöpperbodens (verhältnismässig flach) zu versehen.

Der Einsatz solcher Konstruktionen ist aber bisher bei der Anschwemmfiltration in Kerzenfiltern mit Problemen verbunden: Bei der Entleerung des Filters nach einem Filtrationsvorgang setzt sich Trub auf der Innenfläche des Bodens des Unfiltratraums ab. Deshalb wird bei den konischen Endabschnitten der bekannten Kerzenfilter für die Anschwemmfiltration darauf geachtet, dass die Innenfläche des Bodenteils immer ausreichend steil bleibt, sodass der Trub mehr oder weniger von selbst (aufgrund der Gravitation) nach unten fällt.

Aus dem Dokument CH 688 265 A5 ist ein Verteilelement bekannt, welches im Abstand von der Öffnung des Zufuhr-Rohr angeordnet ist. Zwischen dem Zufuhr-Rohr bzw. der Innenwand des Filterkessels und dem Verteilelement ist ein Durchlass-Spalt für das zu filtrierende Medium vorgesehen.

DE 195 18 575 A1 offenbart eine Vorrichtung und ein Verfahren zum Rückspülen von Kerzen- oder Anschwemmfiltern. Der Behälter des Kerzenfilters enthält einen Mantel, dessen unterer Teil unterhalb der Filterkerzen durch einen Trichter oder einen (nicht gezeigten) gewölbten Boden gebildet ist.

Es ist eine Aufgabe der vorliegenden Erfindung, die Nachteile des Bekannten zu vermeiden, insbesondere also einen Kerzenfilter zu schaffen, der eine Erhöhung des für die Filtration nutzbaren Volumens bei bestehender Filtergrösse bzw. eine Reduktion der Anlagengrösse bei vorgegebenen Filtrationsvolumen erlaubt. Der Kerzenfilter soll ausserdem einfach herzustellen, einfach zu reinigen und wirtschaftlich betreibbar sein.

Erfindungsgemäss werden diese Aufgaben mit einem Kerzenfilter mit den Merkmalen der unabhängigen Patentansprüche gelöst.

Der Kerzenfilter für die Anschwemmfiltration von Getränken und flüssigen Lebensmitteln beinhaltet einen Unfiltratraum und einen Filtratraum, sowie eine den Unfiltratraum vom Filtratraum trennende Lochplatte, mit in Öffnungen der Lochplatte eingesetzten Filterelementen, und mit einem Einlauf zum Einleiten des Unfiltrates in den Unfiltratraum, wobei der Einlauf mit einem Einlaufverteiler mit sich radial nach aussen erstreckenden Öffnungen versehen ist und wobei der im wesentlichen zylindrisch ausgebildete Unfiltratraum einen Boden mit einem sich verjüngenden Abschnitt aufweist, wobei der sich verjüngende Abschnitt und der Einlaufverteiler derart ausgebildet sind, dass wenigstens etwa die gesamte Oberfläche des sich verjüngenden Abschnitts mit einem durch den Einlaufverteiler austretenden Flüssigkeitsstrahl beaufschlagbar ist, und wobei die Innenwand des sich verjüngenden Abschnitts im wesentlichen unter einem Winkel α von mehr als 75° bezogen zur Längsachse des Kerzenfilters verläuft, oder der Boden des Unfiltratraums durch einen Klöpperboden oder durch einen Korbbogenboden gebildet ist.

Der Kerzenfilter für die Anschwemmfiltration von Getränken oder flüssigen Lebensmitteln besteht im wesentlichen aus einem Unfiltratraum und einem Filtratraum. Eine Lochplatte trennt den Unfiltratraum vom Filtratraum. In Öffnungen der Lochplatte sind Filterelemente, sogenannte Filterkerzen eingesetzt. Der Unfiltratraum ist ausserdem mit einem Einlauf zum Einleiten der zu filtrierenden Flüssigkeit versehen.

Zur Filtration wird das unfiltrierte Getränk durch den Einlauf in den Unfiltratraum geführt und durch die Filterelemente gedrückt. Vom Inneren der Filterelemente tritt das nun filtrierte Getränk durch die Öffnungen in der Lochplatte in den Filtratraum und wird von dort abgeführt. Zur Filtration wird ein Filterhilfsmittel, beispielsweise Kieselgur, an die Oberfläche der Filterkerzen angeschwemmt.

Der Einlauf für das Unfiltrat ist mit einem Einlaufverteiler zum Verteilen und Verwirbeln des Unfiltrates im Unfiltratraum versehen. Der Einlaufverteiler weist z.B. sich radial nach aussen erstreckende Öffnungen auf.

Der Unfiltratraum ist im wesentlichen zylindrisch ausgebildet und weist einen Boden mit einem sich nach unten verjüngenden Abschnitt auf.

Gemäss der Erfindung ist der Boden, insbesondere die Form des sich verjüngenden Abschnittes und der Einlaufverteiler derart ausgebildet, dass wenigstens etwa die gesamte Oberfläche des sich verjüngenden Teils durch den Einlaufverteiler mit einem Flüssigkeitsstrahl beaufschlagbar ist. Insbesondere entspricht die Länge der wirksamen Austrittsfläche des Einlaufverteilers bezüglich der Längsachse des Kerzenfilters im wesentlichen wenigstens der Länge der Längsrichtung des sich verjüngenden Abschnitts des Bodens. Die wirksame Austrittsfläche ist definiert als Fläche, welche von der durch die Öffnungen austretenden Flüssigkeit beaufschlagbar ist. Unter Längsrichtung wird die Hauptrichtung des Filtrationsstromes verstanden. Die Längsrichtung ist im allgemeinen vertikal.

Diese Anordnung führt dazu, dass zum Reinigen durch den Einlaufverteiler in den Unfiltratraum eingeleitetes Reinigungsmedium als Flüssigkeitsstrahl durch die Austrittsöffnungen direkt auf die Oberfläche des verjüngenden Abschnitts gerichtet wird. Allfällig auf dieser Oberfläche abgelagerter Trub kann damit wirksam entfernt werden. Dies erlaubt den Boden verhältnismässig flach auszubilden. Insbesondere kann auf den sonst bei Kerzenfiltern üblichen steilen Konusteil verzichtet werden. Die Strömung der Flüssigkeit kann damit durch Führen entlang der flachen Wand zum zylindrischen Teil hin verlangsamt werden.

In einem bevorzugten Ausführungsbeispiel erstreckt sich die Innenwand des sich verjüngenden Abschnitts im wesentlichen unter einem Winkel von mehr als 75° bezüglich der Längsachse des Kerzenfilters.

Besonders vorteilhaft ist es, dass untere Ende des Unfiltratraumes mit einem Klöpperboden oder Korbbogenboden auszubilden. Praktisch bedeutet dies, dass Filterkessel für Siebfilter durch Ersetzen der Siebfilterelemente und der zentralen Welle und durch Einbau von an einer Trennplatte befestigten Kerzen zu Kerzenfiltern für die Auschwemmfiltration umgerüstet werden können. Bedingung ist der Einsatz eines entsprechend dimensionierten Einlaufverteilers.

Der Einlauf erstreckt sich vorteilhaft von unten her in den Unfiltratraum und der Einlaufverteiler ist als eine im wesentlichen zylindrische Aussenfläche ausgebildet, die mit Durchtrittsöffnungen versehen ist.

Selbstverständlich sind auch andere Einlaufverteiler denkbar, beispielsweise mit schrägen Durchtrittsöffnungen, die ein Beaufschlagen des sich verjüngenden Abschnitts erlauben.

Im Gegensatz zu bekannten Kerzenfiltern für die Anschwemmfiltration wird gemäss der vorliegenden Erfindung nach Ende der Filtration der Trub nicht am unteren Teil des Unfiltratraumes gesammelt und erst dann entfernt. Stattdessen wird der Trub kontinuierlich ausgetragen. Dies wird möglich, weil das Volumen des Trubes im Bezug zum Gesamtvolumen im Unfiltratraum verhältnismässig gross ist. Unter Volumen des Trubes wird das maximale Volumen des bei normalem Betrieb an den Filterelementen angesammelten Filterkuchens verstanden. Gesamtvolumen bedeutet das freie Volumen, d.h. ohne Filterelemente und etwaige Einbauten. Das heisst, dass der Wasseranteil im entfernten Trub verhältnismässig klein ist, sodass eine Abtrennung des Wassers vom Trub vor dem Austrag nicht erforderlich ist.

In einem weiteren Aspekt der Erfindung ist die Länge der hängend im Unfiltratraum angeordneten Filterkerzen derart gewählt, dass sich die Filterkerzen im wesentlichen über die ganze Länge des zylindrischen Teils des Unfiltratraumes erstrecken.

Bei bekannten Kerzenfiltern für die Anschwemmfiltration erstreckten sich die Filterkerzen nur bis auf eine bestimmte Höhe oberhalb des konischen Bodens des Unfiltratraumes. Dies war nötig, um zu vermeiden, dass die Enden der Filterkerze vor dem Trubaustrag in dem im konischen Bodenteil angesammelten Trub liegen.

Dank der verlängerten Filterkerzen gemäss der Erfindung wird der Trubanteil bezogen auf das Gesamtvolumen des Unfiltratraumes erhöht, was einen unmittelbaren Trubaustrag ohne vorangehendes Ansammeln des Trubes und Entfernen von Flüssigkeit ermöglicht. Das Problem von im Trub liegenden Enden der Filterkerzen tritt daher gar nicht auf.

Die Länge der Filterkerzen beträgt typischerweise etwa 0,5 bis 2,5 m, vorzugsweise 1,0 bis 2,0 m.

Das Verhältnis zwischen Trubvolumen und Volumen des Unfiltratraumes beträgt vorzugsweise etwa mehr als 0,4 zu 1, vorteilhaft etwa mehr als 0,5 zu 1.

Der Boden des Unfiltratraumes kann mit einem topfartigen Ende versehen sein. Das topfartige Ende ist mit zwei Anschlüssen versehen. Ein erster Anschluss ist mit dem Einlaufverteiler verbunden und ein zweiter Anschluss ist im unteren Ende des topfartigen Endes angeordnet und dient zum Einleiten/Entfernen von Flüssigkeit im wesentlichen in Längsrichtung. Der erste Anschluss dient zum Einleiten von Flüssigkeit in den Unfiltratraum und der zweite Anschluss kann wahlweise zum Einleiten von Flüssigkeit in den Unfiltratraum und zum Entfernen von Flüssigkeit, insbesondere auch zum Trubaustrag eingesetzt werden.

Vorteilhaft ist zwischen den beiden Anschlüssen eine Ventilanordnung vorgesehen, die wahlweise das Öffnen des einen, des anderen oder auch beider Anschlüsse ermöglicht.

Diese Konstruktion ist vor allem für den Sortenwechsel vorteilhaft. Beim normalen Filtrationsbetrieb ist eine gleichmässige Anschwemmung der Filterkerzen nötig. Deshalb wird die zu filtrierende Flüssigkeit über den Einlaufverteiler in den Unfiltratraum eingeleitet, durch den Einlaufverteiler verwirbelt und gleichmässig um die Filterkerzen gespült.

Beim Sortenwechsel ist es wesentlich, dass eine möglichst geringe Vermischung zwischen der ersten Getränkesorte und dem nachfolgendem Wasser auftritt (Vermeidung von Verlusten). Deshalb ist eine Verwirbelung des zum Herausdrücken der Flüssigkeit verwendeten Wassers mit der Flüssigkeit unerwünscht. Beim Sortenwechsel wird die Flüssigkeit also vorzugsweise über eine kürzere Zeitphase (ca. 30 Minuten) über den unteren Anschluss in den Unfiltratraum eingeleitet. Beim Verdrängen der Flüssigkeit im Unfiltratraum beim Sortenwechsel entsteht dabei eine geringe Verwirbelung.

Während des Umschaltens von der einen Betriebsart (Einleiten über den Einlaufverteiler) zur anderen Betriebsart (Einleiten über den unteren Anschluss) werden vorzugsweise während einer gewissen Zeitspanne beide Anschlüsse geöffnet. Ein erster Vorteil bei diesem Verfahren besteht darin, dass die Austrittsgeschwindigkeit aus dem Einlaufverteiler verringert wird (die gleiche Wassermenge tritt über zwei Anschlüsse ein, was zu einem vergrösserten Querschnitt führt). Deshalb ist die Verwirbelung beim Einlaufverteiler verringert. Ausserdem führt das Umschalten von der einen zur anderen Betriebsart über eine Zwischenstufe zu geringeren Druckstössen beim Schliessen der Ventile.

Die Erfindung wird im Folgenden in Ausführungsbeispielen und anhand der Zeichnungen näher erläutert. Es zeigen:
- Figur 1: Querschnitt durch einen erfindungsgemässen Kerzenfilter,
- Figur 2: schematische Darstellung des topfartigen Endes des Unfiltratraumes mit zwei Anschlüssen und
- Figur 3: vergrösserte Darstellung des Einlaufs des Kerzenfilters aus Figur 1.

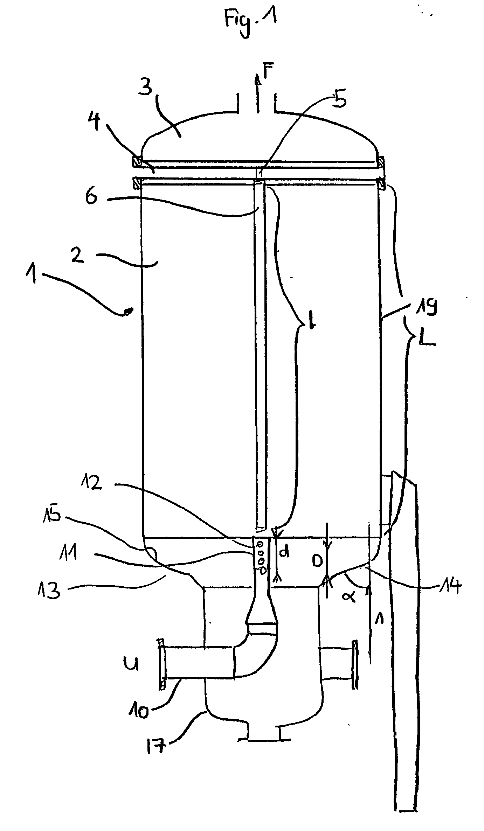

Figur 1 zeigt einen Kerzenfilter 1. Der Kerzenfilter 1 besteht im wesentlichen aus einem Unfiltratraum 2 und einem Filtratraum 3. Der Unfiltratraum 2 ist vom Filtratraum 3 durch eine Lochplatte 4 getrennt. Die Lochplatte 4 ist mit einer Vielzahl von Öffnungen 5 versehen, die zur Aufnahme von Filterkerzen 6 dienen. Die Filterkerzen 6 sind hängend im Unfiltratraum 2 angeordnet. Zur Vereinfachung der Darstellung ist nur eine einzelne Filterkerze 6 gezeigt.

Die zu filtrierende Flüssigkeit U (das Unfiltrat) wird durch einen Einlauf 10 im unteren Ende des Unfiltratraumes 2 in den Unfiltratraum 2 eingeleitet. Am Ende des Einlaufes 10 ist ein Einlaufverteiler 11 angeordnet, der zum möglichst gleichmässigen Verteilen des Unfiltrates U im Unfiltratraum 2 dient. Der Einlaufverteiler 11 ist mit Austrittsöffnungen 12 versehen, die sich radial nach aussen erstrecken.

Zur Filtration wird eine Schicht von Filterhilfsmitteln (beispielsweise Kieselgur) an der Oberfläche der Filterkerzen 6 angeschwemmt. Das Unfiltrat U tritt durch die angeschwemmte Schicht an Filterhilfsmitteln in das Innere der Filterkerzen 6 und durch die Öffnungen 5 in den Filtratraum 3. Die gefilterete Flüssigkeit F (das Filtrat) wird durch einen Anschluss aus dem Filtratraum 3 entfernt.

Der Boden 13 des Unfiltratraumes 2 weist einen sich verjüngenden Abschnitt 14 auf. Erfindungsgemäss ist der verjüngende Abschnitt 14 und der Einlaufverteiler 11 derart ausgebildet, dass die Länge d der wirksamen Austrittsfläche des Einlaufverteilers 11 in Längsrichtung A gesehen im wesentlichen wenigstens der Länge D des sich verjüngenden Abschnitts 14 des Bodens 13 des Unfiltratraumes 2 entspricht. Damit kann der Abschnitt 14 mit einem Flüssigkeitsstrahl S beaufschlagt werden.

Die Innenwand 15 des sich verjüngenden Abschnittes 14 verläuft unter einem Winkel α zur Längsachse A des Kerzenfilters 1. Der Winkel α beträgt etwa 75°.

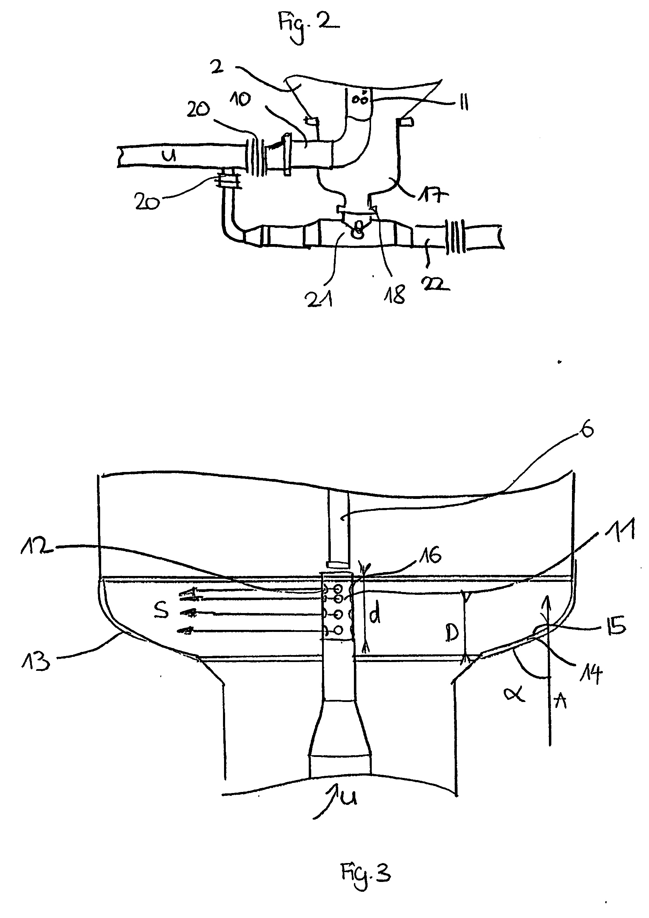

Der Einlaufverteiler weist eine etwa zylindrische Aussenfläche 16 auf (siehe Figur 3), in welcher die Druchtrittsöffnungen 12 angebracht sind. Es sind aber auch andere dem Fachmann aus der Literatur bekannte Anordnungen von Einlaufverteilern denkbar.

Der Boden 13 des Unfiltratraumes 2 ist ausserdem mit einem topfartigen Abschnitt 17 versehen. Der topfartige Abschnitt 17 ist mit Anschlüssen versehen und dient dem Einleiten bzw. Entfernen von Flüssigkeit oder auch zum Trubaustrag.

Figur 1 zeigt einen topfartigen Abschnitt mit einem Anschluss zum Einleiten von Flüssigkeit und zwei Anschlüssen zum Trubaustrag.

Die Filterkerzen 6 weisen eine Länge l auf, die im wesentlichen der Länge L des zylindrischen Abschnittes 19 des Unfiltratraumes 2 entspricht.

Nach der Filtration wird der an der Oberfläche der Filterkerzen 6 haftende Trub entfernt (beispielsweise durch Rückspülung). Der Trub fällt aufgrund der Gravitation und der Rückspülung nach unten und wird im Bereich des sich verjüngenden Abschnitts 14 und im topfartigen Abschnitt 17 des Bodens 13 des Unfiltratraums 2 gesammelt.

Weil das Verhältnis vom Trubvolumen zum Gesamtvolumen des Unfiltratraums 2 vergleichsweise gross ist, ist der Wasseranteil im entfernten Trub gering, sodass der Trub direkt aus dem topfartigen Abschnitt 17 entfernt werden kann, ohne dass zuerst der Wasseranteil im Trub verringert werden muss.

Allfällig sich auf der verhältnismässig flachen Innenwand 15 des sich verjüngenden Abschnitts 14 des Bodens 13 ablagender Trub kann durch Einleiten von Wasser durch den Einlaufverteiler 11 entfernt werden. Die sich radial nach aussen erstreckenden Öffnungen 12 im Einlaufverteiler 11, die sich etwa über die gleiche Höhe erstrecken wie der sich verjüngende Abschnitt 14, erlauben ein Reinigen des Abschnitts 14.

In Figur 1 ist eine Anordnung des topfartigen Abschnitts 17 gezeigt, die im wesentlichen der Anordnung bei bekannten Filteranordnungen entspricht.

Figur 2 zeigt eine Anordnung des topfartigen Abschnitts 17 gemäss einem weiteren Aspekt der Erfindung. Der topfartige Abschnitt 17 ist mit zwei Anschlüssen versehen. Ein erster Anschluss besteht aus dem Einlauf 10 und dient zum Einleiten von Flüssigkeit in den Unfiltratraum 2. Ein zweiter Anschluss 18 ist am unteren Ende des topfartigen Abschnitts 17 angebracht.

Die beiden Anschlüsse sind über eine Ventilanordnung 20 miteinander verbunden. Eine weitere Ventilanordnung 21 erlaubt, den Anschluss 18 entweder mit der Ventilanordnung 20 oder mit einem Abfluss 22 zu verbinden.

Beim normalen Filtrationsbetrieb wird das Unfiltrat U über den Einlauf 10 in den Unfiltratraum 2 eingeleitet. Der Einlaufverteiler 11 gewährleistet eine gleichmässige Anspülung der in Figur 2 nicht gezeigten Filterkerzen. Beim Wechsel des Typs der zu filtrierenden Flüssigkeit auf einen anderen Typ wird das Unfiltrat U, das sich im Unfiltratraum 2 befindet durch nachfolgendes Wasser verdrängt. Das zur Verdrängung verwendete Wasser wird dann durch die nachfolgende Charge des zweiten Typs Unfiltrat verdrängt. Bei der Verdrängung ist eine möglichst geringe Verwirbelung der in den Unfiltratraum 2 einleiteten Flüssigkeit erwünscht. Deshalb wird die Flüssigkeit beim Sortenwechsel über den Anschluss 18 eingeleitet. Die Ventilanordnung 20 erlaubt einen Betrieb in einer Zwischenstufe, in welcher ein Teil der Flüssigkeit über den Einlauf 10 und der andere Teil über den Anschluss 18 eingeleitet wird. Damit wird die Eintrittsgeschwindigkeit und damit die Verwirbelung der Flüssigkeit reduziert.

Zum Austrag von Trub wird der Anschluss 18 über die Ventilanordnung 21 mit dem Abfluss 22 verbunden. Trub kann direkt aus dem topfartigen Abschnitt 17 entfernt werden.

Figur 3 zeigt eine vergrösserte Darstellung des Kerzenfilters 1 aus Figur 1 im Bereich des Bodens 13. Ein Flüssigkeitsstrahl S tritt aus dem Einlaufverteiler 11 aus und trifft auf die Oberfläche 15 des sich verjüngenden Abschnitts 14. Damit kann auf dem Abschnitt 14 abgelagerter Trub entfernt werden.

## Patentansprüche

1. Kerzenfilter (1) für die Anschwemmfiltration von Getränken und flüssigen Lebensmitteln, mit einem Unfiltratraum (2), mit einem Filtratraum (3), mit einem den Unfiltratraum (2) vom Filtratraum (3) trennenden Lochplatte (4), mit in Öffnungen (5) der Lochplatte (4) eingesetzten Filterelementen (6), und mit einem Einlauf (10) zum Einleiten des Unfiltrates (U) in den Unfiltratraum (2), wobei der Einlauf (10) mit einem Einlaufverteiler (11) mit sich radial nach aussen erstreckenden Öffnungen (12) versehen ist und wobei der im wesentlichen zylindrisch ausgebildete Unfiltratraum (2) einen Boden (13) mit einem sich verjüngenden Abschnitt (14) aufweist, wobei der sich verjüngende Abschnitt (14) und der Einlaufverteiler (11) derart ausgebildet sind, dass wenigstens etwa die gesamte Oberfläche des sich verjüngenden Abschnitts (14) mit einem durch den Einlaufverteiler (11) austretenden Flüssigkeitsstrahl (S) beaufschlagbar ist, und wobei die Innenwand (15) des sich verjüngenden Abschnitts (14) im wesentlichen unter einem Winkel (α) von mehr als 75° bezogen zur Längsachse (A) des Kerzenfilters (1) verläuft, oder der Boden (13) des Unfiltratraums (2) durch einen Klöpperboden oder durch einen Korbbogenboden gebildet ist.

2. Kerzenfilter (1) nach Anspruch 1, **dadurch gekennzeichnet, dass** die Länge (d) der wirksamen Austrittsfläche des Einlaufverteilers (11) in Längsrichtung (A) des Kerzenfilters gesehen wenigstens etwa der Länge (D) des sich verjüngenden Abschnitts (14) entspricht.

3. Kerzenfilter (1) nach einem der Ansprüche 1 oder 2, **dadurch gekennzeichnet, dass** der Einlauf (10) sich von unten her in den Unfiltratraum (2) erstreckt und dass der Einlaufverteiler (11) eine im wesentlichen zylindrische Aussenfläche (16) aufweist, die mit Durchtrittsöffnungen (12) versehen ist.

4. Kerzenfilter (1) nach einem der Ansprüche 1 bis 3, **dadurch gekennzeichnet, dass** unterhalb des Einlaufverteilers (11) der Unfiltratraum (2) mit einem topfartigen Ende (17) verschlossen ist, in welchem wenigstens ein Anschluss (18) zum Trubaustrag vorgesehen ist.

5. Kerzenfilter (1) nach einem der Ansprüche 1 bis 4, **dadurch gekennzeichnet, dass** sich die Filterelemente (6) im wesentlichen über die ganze Länge (L) des zylindrischen Abschnitts (19) erstrecken.

6. Kerzenfilter nach Anspruch 5, **dadurch gekennzeichnet, dass** die Filterkerzen (6) eine Länge (1) von etwa 0,5 bis 2,5 m aufweisen.

7. Kerzenfilter nach einem der Ansprüche 1 bis 6, **dadurch gekennzeichnet, dass** das Verhältnis zwischen dem Trubvolumen und dem Volumen des Unfiltratraumes (2) grösser als 0,4 zu 1 ist.

8. Kerzenfilter nach einem der Ansprüche 4 bis 7, **dadurch gekennzeichnet, dass** das topfartige Ende (17) mit wenigstens zwei Anschlüssen versehen ist, wobei ein erster Anschluss (10) mit dem Einlaufverteiler (11) verbunden ist und wobei ein zweiter Anschluss (18) im unteren Ende des topfartigen Endes (17) angeordnet ist und zum Einleiten/Entfernen von Flüssigkeit im wesentlichen in Längsrichtung (A) des Kerzenfilters dient, wobei der erste Anschluss zum Einleiten von Flüssigkeit in den Unfiltratraum (2) und der zweite Anschluss (18) wahlweise zum Einleiten von Flüssigkeit in den Unfiltratraum (2) und zum Abführen von Flüssigkeit aus dem Unfiltratraum, bzw. zum Trubaustrag dient.

9. Kerzenfilter nach Anspruch 8, **dadurch gekennzeichnet, dass** zwischen dem ersten Anschluss (10) und dem zweiten Anschluss (18) eine Ventilanordnung (20) angeordnet ist, die wahlweise das Einleiten von Flüssigkeit über den ersten Anschluss (10), über den zweiten Anschluss (18) oder über beide Anschlüsse (10, 18) erlaubt.

10. Verfahren zum Entfernen von Trub auf einem sich verjüngenden Abschnitt (14) im Boden (13) eines Kerzenfilters (1) mit einem Unfiltratraum (2), mit einem Filtratraum (3), mit einem den Unfiltratraum (2) vom Filtratraum (3) trennenden Lochplatte (4), mit in Öffnungen (5) der Lochplatte (4) eingesetzten Filterelementen (6), und mit einem Einlauf (10) zum Einleiten des Unfiltrates (U) in den Unfiltratraum (2), wobei der Einlauf (10) mit einem Einlaufverteiler (11) mit sich radial nach aussen erstreckenden Öffnungen (12) versehen ist und wobei der im wesentlichen zylindrisch ausgebildete Unfiltratraum (2) einen Boden (13) mit einem sich verjüngenden Abschnitt (14) aufweist, **dadurch gekennzeichnet, dass** die Oberfläche (15) des Abschnitts (14) mit einem durch einen Einlaufverteiler (11) radial nach aussen austretenden Flüssigkeitsstrahl (S) beaufschlagt und damit gereinigt wird.

11. Verfahren zur Filtration von Getränken mit einem Kerzenfilter gemäss einem der Ansprüche 1 bis 9 und zum Austrag von Trub aus dem Unfiltratraum, wobei Trub und Flüssigkeit nach Beendigung der Filtration gemeinsam aus dem Unfiltratraum entfernt werden und wobei auf eine Trennung von Trub und Flüssigkeit verzichtet wird.

## Claims

1. Candle filter (1) for the precoat filtration of beverages and liquid foodstuffs, having an unfiltrate space (2), having a filtrate space (3), having a perforated plate (4) separating the unfiltrate space (2) from the filtrate space (3), having filter elements (6) inserted into openings (5) in the perforated plate (4), and having an inlet (10) for introducing the unfiltrate (U) into the unfiltrate space (2), the inlet (10) being provided with an inlet distributor (11) having openings (12) extending radially outwards, and the substantially cylindrical unfiltrate space (2) having a bottom (13) with a tapering section (14), the tapering section (14) and the inlet distributor (11) being formed in such a way that, at least approximately, the entire surface of the tapering section (14) can be acted on with a liquid jet (S) emerging from the inlet distributor (11), and the inner wall (15) of the tapering section (14) extending substantially at an angle (α) of more than 75°, based on the longitudinal axis (A) of the candle filter (1), or the bottom (13) of the unfiltrate space (2) being formed by a dished bottom or a catenary bottom.

2. Candle filter (1) according to Claim 1, **characterized in that** the length (d) of the effective outlet surface of the inlet distributor (11), as viewed in the longitudinal direction (A) of the candle filter, corresponds at least approximately to the length (D) of the tapering section (14).

3. Candle filter (1) as claimed in either of Claims 1 and 2, **characterized in that** the inlet (10) extends into the unfiltrate space (2) from below, and **in that** the inlet distributor (11) has a substantially cylindrical outer surface (16) which is provided with passage openings (12).

4. Candle filter (1) according to one of Claims 1 to 3, **characterized in that**, underneath the image distributor (11), the unfiltrate space (2) is closed by a pot-like end (17) in which at least one connection (18) for discharging sludge is provided.

5. Candle filter (1) according to one of Claims 1 to 4, **characterized in that** the filter elements (6) extend substantially over the entire length (L) of the cylindrical section (19).

6. Candle filter according to Claim 5, **characterized in that** the filter candles (6) have a length (1) of approximately 0.5 to 2.5 m.

7. Candle filter according to one of Claims 1 to 6, **characterized in that** the ratio between the sludge volume and the volume of the unfiltrate space (2) is greater than 0.4 to 1.

8. Candle filter according to one of Claims 4 to 7, **characterized in that** the pot-like end (17) is provided with at least two connections, a first connection (10) being connected to the inlet distributor (11) and a second connection (18) being arranged in the lower end of the pot-like end (17) and being used for the introduction/removal of liquid substantially in the longitudinal direction (A) of the candle filter, the first connection being used to introduce liquid into the unfiltrate space (2) and the second connection (18) being used optionally to introduce liquid into the unfiltrate space (2) and to discharge liquid from the unfiltrate space or to remove the sludge.

9. Candle filter according to Claim 8, **characterized in that** between the first connection (10) and the second connection (18) there is arranged a valve arrangement (20) which optionally permits the introduction of liquid via the first connection (10), via the second connection (18) or via both connections (10, 18).

10. Method of removing sludge from a tapering section (14) in the bottom (13) of a candle filter (1) having an unfiltrate space (2), having a filtrate space (3), having a perforated plate (4) separating the unfiltrate space (2) from the filtrate space (3), having filter elements (6) inserted into openings (5) in the perforated plate (4), and having an inlet (10) for introducing the unfiltrate (U) into the unfiltrate space (2), the inlet (10) being provided with an inlet distributor (11) having openings (12) extending radially outwards, and the substantially cylindrical unfiltrate space (2) having a bottom (13) with a tapering section (14), **characterized in that** the surface (15) of the section (14) can be acted on and therefore cleaned by a liquid jet (S) emerging radially outwards through an inlet distributor (11).

11. Method for the filtration of beverages with a candle filter according to one of Claims 1 to 9 and for removing sludge from the unfiltrate space, sludge and liquid being removed together from the unfiltrate space after filtration has been completed, and separation of sludge and liquid being dispensed with.

## Revendications

1. Filtre à bougies (1) pour la filtration à couches de boissons et d'aliments liquides, comprenant une chambre pour produit à filtrer (2), une chambre pour filtrat (3), une plaque perforée (4) qui sépare les chambres (2) et (3), des éléments filtrants (6) qui sont placés dans des ouvertures (5) de la plaque perforée (4), et une entrée (10) pour l'amenée du produit à filtrer (U) dans la chambre pour produit à filtrer (2), étant précisé que l'entrée (10) est pourvue d'un répartiteur d'entrée (11) avec des ouvertures (12) qui s'étendent radialement vers l'extérieur, que la chambre pour produit à filtrer (2) de forme sensiblement cylindrique présente un fond (13) avec une section effilée (14), que ladite section effilée (14) et le répartiteur d'entrée (11) sont conçus de telle sorte qu'au moins approximativement toute la surface de la section effilée (14) soit apte à être sollicitée à l'aide d'un jet de liquide (S) qui sort par le répartiteur d'entrée (11), et que la paroi intérieure (15) de la section effilée (14) s'étend sensiblement suivant un angle (α) de plus de 75° par rapport à l'axe longitudinal (A) du filtre à bougies (1) ou que le fond (13) de la chambre pour produit à filtrer (2) est défini par un fond torosphérique ou par un fond en anse de panier.

2. Filtre à bougies (1) selon la revendication 1, **caractérisé en ce que** la longueur (d) de la surface de sortie effective du répartiteur d'entrée (11), considérée dans le sens longitudinal (A) du filtre à bougies, correspond au moins approximativement à la longueur (D) de la section effilée (14).

3. Filtre à bougies (1) selon la revendication 1 ou 2, **caractérisé en ce que** l'entrée (10) s'étend à partir du bas jusque dans la chambre pour produit à filtrer (2), et **en ce que** le répartiteur d'entrée (11) présente une surface extérieure (16) sensiblement cylindrique qui est pourvue d'ouvertures de passage (12).

4. Filtre à bougies (1) selon l'une des revendications 1 à 3, **caractérisé en ce que** la chambre pour produit à filtrer (2) est fermée, au-dessous du répartiteur d'entrée (11), par une extrémité en forme de pot (17) dans laquelle est prévu au moins un raccordement (18) pour l'évacuation de la lie.

5. Filtre à bougies (1) selon l'une des revendications 1 à 4, **caractérisé en ce que** les éléments filtrants (6) s'étendent sensiblement sur toute la longueur (L) de la section cylindrique (19).

6. Filtre à bougies selon la revendication 5, **caractérisé en ce que** les bougies filtrantes (6) ont une longueur (1) d'environ 0,5 à 2,5 m.

7. Filtre à bougies selon l'une des revendications 1 à 6, **caractérisé en ce que** le rapport entre le volume de lie et le volume de la chambre pour produit à filtrer (2) est supérieur à 0,4 sur 1.

8. Filtre à bougies selon l'une des revendications 4 à 7, **caractérisé en ce que** l'extrémité en forme de pot (17) est pourvue d'au moins deux raccordements, un premier raccordement (10) étant relié au répartiteur d'entrée (11) tandis qu'un second raccordement (18) est disposé dans l'extrémité inférieure de l'extrémité en forme de pot (17) et sert à introduire/évacuer du liquide sensiblement dans le sens longitudinal (A) du filtre à bougies, et le premier raccordement servant à introduire le liquide dans la chambre pour produit à filtrer (2) tandis que le second raccordement (18) sert sélectivement à introduire le liquide dans la chambre pour produit à filtrer (2), et à évacuer le liquide de celle-ci et à évacuer la lie.

9. Filtre à bougies selon la revendication 8, **caractérisé en ce qu'**il est prévu entre le premier raccordement (10) et le second raccordement (18) un dispositif à soupape (20) qui permet sélectivement d'introduire le liquide par le premier raccordement (10), par le second raccordement (18) ou par les deux raccordements (10, 18).

10. Procédé pour évacuer la lie sur une section effilée (14) du fond (13) d'un filtre à bougies (1) comprenant une chambre pour produit à filtrer (2), une chambre pour filtrat (3), une plaque perforée (4) qui sépare les chambres (2) et (3), des éléments filtrants (6) qui sont placés dans des ouvertures (5) de la plaque perforée (4), et une entrée (10) pour l'amenée du produit à filtrer (U) dans la chambre pour produit à filtrer (2), étant précisé que l'entrée (10) est pourvue d'un répartiteur d'entrée (11) avec des ouvertures (12) qui s'étendent radialement vers l'extérieur, et que la chambre pour produit à filtrer (2) de forme sensiblement cylindrique présente un fond (13) avec une section effilée (14),
**caractérisé en ce que** la surface (15) de la section (14) est sollicitée par un jet de liquide (S) qui sort d'un répartiteur d'entrée (11) radialement vers l'extérieur, et est ainsi nettoyée.

11. Procédé pour filtrer des boissons à l'aide d'un filtre à bougies selon l'une des revendications 1 à 9 et pour évacuer la lie de la chambre pour produit à filtrer, selon lequel la lie et le liquide sont évacués ensemble de ladite chambre, après la fin de la filtration, et on renonce à séparer la lie et le liquide.
